# EUROPEAN PATENT APPLICATION

(11) **EP 2 851 766 A1**
(43) Date of publication of application: **25.03.2015**
(21) Application number: 13829316.2
(22) Date of filing: 16.08.2013
(51) Int. Cl.: G06F 3/041, G06F 3/048

(54) **METHOD FOR PREVENTING MISOPERATION OF A TOUCHSCREEN, TOUCHSCREEN AND MOBILE TERMINAL**

(30) Priority: 17.08.2012 CN 201210295655
(71) Applicant: Xiaomi Inc., Beijing 100085 (CN)
(72) Inventor: NIU, Kun, Beijing 100085 (CN); LIU, Xinyu, Beijing 100085 (CN); QIAO, Zhongliang, Beijing 100085 (CN)
(74) Representative: Hanna, Peter William Derek
(86) International application number: PCT/CN2013/081621
(87) International publication number: WO 2014/026633

(57) **Abstract**

Disclosed are a method for preventing the misoperation of a touchscreen, a touchscreen and a mobile terminal. The method includes: when it is detected that a touch point exists in a display region on a touchscreen, determining whether the touch point is located in a set invalid touch region; and if it is determined that the touch point is located in the invalid touch region, not responding to the touch point. By way of not responding to a touch point when it is determined that the touch point is located in an invalid touch region, the present invention can avoid the problem that a corresponding function is triggered mistakenly when a user touches the invalid touch region, improving the accuracy degree and validity of the touch effect of a touchscreen.

## Description

### TECHNICAL FIELD

The present invention relates to the technical field of touch screen, and more particularly, to a method for preventing an accidental operation on a touch screen, a touch screen and a mobile terminal.

### BACKGROUND

With the development of technologies, integration degree of mobile phones is increasingly higher, and meanwhile the mobile phones are developed towards a larger touch screen and a thinner bezel. However, when a mobile phone has a thinner bezel, it is easy for a user to touch edges of the touch screen when he/she holds the mobile phone, which results in accidental operations.

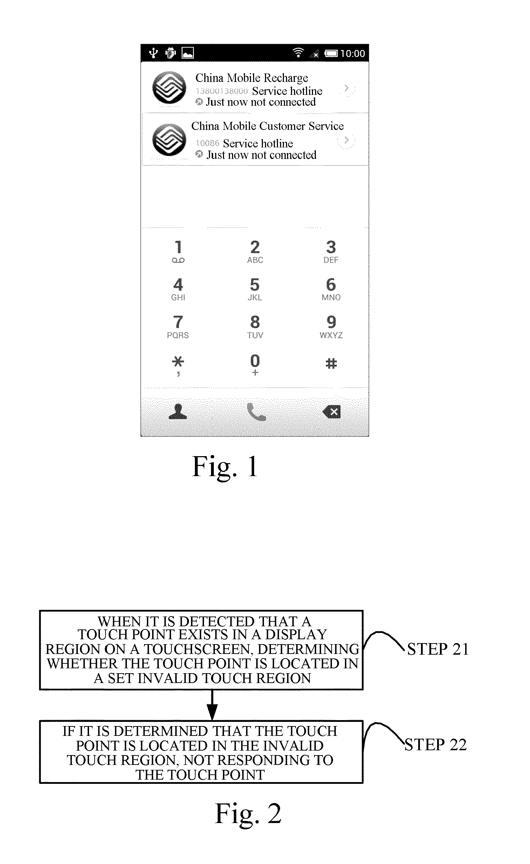

For example, Fig. 1 is an interface of call record of a mobile phone. In the interface, each list item corresponds to an area for displaying this list item on the touch screen. Normally, when the user touches a display area corresponding to a certain list item, a function of calling the corresponding phone is triggered. That is to say, corresponding functions may be triggered by touching the display areas of the list items. However, since the display areas of the list items usually extend to edges of the touch screen, when the user holds the edges of the mobile phone with his/her hand but he/she does not want to make a phone call, the edge area of the touch screen is easily to be touched by accident due to the thin bezel, thereby resulting in a misdial. Similarly, the same problem exists in a short message interface, an application interface and so on.

The existing technologies usually avoid the occurrence of the above accidental operations by locking the screen of the mobile phone. However, this needs the user to perform locking timely, and the user needs to perform unclocking when he/she wants to operate the interface of the mobile phone again, and thus complexity of user operation is increased. Further, once the user forgets to lock, the problem of the above accidental operation still exists.

### SUMMARY

The present invention provides a method for preventing an accidental operation on a touch screen, a touch screen and a mobile terminal, which may improve the accuracy and effectiveness of the touch responses of the touch screen, and thereby avoid the problem that the corresponding function is performed by mistake due to an accidental touch on the screen.

The method of the present invention includes:
a method for preventing an accidental operation on a touch screen, including:
when it is detected that a touch point exists in a display area on the touch screen, determining whether the touch point is located within a set invalid touch area;
if it is determined that the touch point is located within the invalid touch area, not responding to the touch point.

A touch screen includes:
an invalid determining module configured to, when it is detected that a touch point exists in a display area on the touch screen, determine whether the touch point is located within a set invalid touch area; and
an invalid processing module configured to, if it is determined that the touch point is located within the invalid touch area, not respond to the touch point.

A mobile terminal includes the above-mentioned touch screen.

In the method for preventing an accidental operation on a touch screen, the touch screen and the mobile terminal provided by the present invention, when it is determined that the touch point is located within the invalid touch area, the touch point is not responded to. Thus, the problem that the corresponding function is triggered by mistake when the user touches the invalid touch area may be avoided, and thereby the accuracy and the effectiveness of the touch effects of the touch screen are improved.

### BRIEF DESCRIPTION OF THE DRAWINGS

In order to explain the technical solutions of embodiments of the present disclosure more clearly, simple introduction to the drawings required to be used in the description of the embodiments of the present disclosure will be made below. It is apparent that the drawings in the following description are only some examples of the embodiments of the present disclosure, and one of ordinary skill in this art may obtain other drawings from these drawings without inventive work.
Fig. 1 is an interface of call record of a mobile phone commonly used in conventional technologies;
Fig. 2 is a flow chart illustratively showing a method for preventing an accidental operation on a touch screen according to a first embodiment of the present invention;
Fig. 3 is a block diagram showing a structure of a touch screen according to a second embodiment of the present invention;
Fig. 4 is a block diagram of a mobile terminal according to a third embodiment of the present invention; and
Fig. 5 is a block diagram of an invalid touch area setting for the interface of call record according to a fourth embodiment of the present invention.

### DETAILED DESCRIPTION

Embodiments of the method for preventing an accidental operation on a touch screen, a touch screen and a mobile terminal provided by the present invention will be described in detail in conjunction with the drawings and specific embodiments.

### First Embodiment

The present embodiment provides a method for preventing an accidental operation on a touch screen. As shown in Fig. 2, the method includes the following steps.

In step 21, when it is detected that a touch point exists in a display area on the touch screen, whether the touch point is located within a set invalid touch area is determined.

Specifically, the touch screen is a screen for displaying images and receiving touch signals to trigger corresponding functions. In this step, when it is detected that a touch point exists on the touch screen, whether the touch point is located within an invalid touch area is further detected. The invalid touch area is an area which is usually touched under a condition of an accidental operation on the touch screen.

In step 22, if it is determined that the touch point is located within the invalid touch area, the touch point is not responded to.

Specifically, in this step, the invalid touch area is set as not responding to the touch operation, that is to say, when it is determined that the touch point is located within the invalid touch area, the touch is judged as an accidental operation touch, and the function corresponding to the invalid touch area is not triggered.

In the method for preventing an accidental operation on a touch screen provided by the present embodiment, when it is determined that the touch point is located within the invalid touch area, the touch point is not responded to. Thus, the problem that the corresponding function is triggered by mistake when the user touches the invalid touch area may be avoided, and thereby the accuracy and effectiveness of the touch effects of the touch screen are improved.

Preferably, the invalid touch area is preset within the display area on the touch screen.

Specifically, the user may, according to actual requirements, determine an area which is usually touched under a condition of normal operation on the touch screen (i.e., not a condition of accidental operation on the touch screen) and an area which is usually touched under a condition of an accidental operation on the touch screen in advance, and set the area which is usually touched under the condition of normal operation on the touch screen as an valid touch area and set the area which is usually touched under the condition of the accidental operation on the touch screen as the invalid touch area.

Further, the invalid touch area is set as not responding to the touch operation, and the valid touch is set as responding to the touch operation. That is to say, when it is determined that the touch point is located within the invalid touch area, the touch is judged as the accidental operation touch, and the function corresponding to the invalid touch area is not triggered; and when it is determined that the touch point is located within the valid touch area, the touch is judged as the touch under the normal operation, and the function corresponding to the effective touch area is triggered.

In addition, in the method provided by the present invention, the invalid touch area may be, in addition to be preset by the user according to actual requirements, a certain area on the touch screen which is preset by the system by default, i.e., the system presets a certain invalid touch area as a default option, and the user may select to use the default invalid touch area in the system, or set the invalid touch area according to actual requirements.

Irrespective of the default invalid touch area in the system or the invalid touch area which is preset by the user according to actual requirements, the problem that the corresponding function is triggered by mistake when the user touches the invalid touch area may be avoided, and thereby the accuracy and effectiveness of the touch effects of the touch screen are improved. As compared with the screen locking in the conventional technologies, the inventive method is simple for operation, the function for preventing an accidental operation may be realized only by performing the setting step for once, and thus it is convenient and fast for the user to operate and the user experience is improved.

Preferably, in the above method, the invalid touch area is preset within a display touch area on the touch screen specifically includes: for an area on the touch screen for displaying a predetermined image, presetting the invalid touch area.

Specifically, the images displayed on the touch screen changes with the change of corresponding functions. An area which is usually touched when normally operating one image interface may be an area which is touched when operating another image interface by mistake. Thus, the embodiments of the present invention may set corresponding
invalid touch areas for predetermined image interfaces according to actual requirements, that is to say, when the touch screen displays the predetermined image interface, if the touch point appears in the invalid touch area which is set for this predetermine image interface, the function corresponding to the predetermined image interface will not be triggered. It shall be noted that, the predetermined image interface may be the whole touch screen interface, or may be an area on the touch screen for only displaying the predetermined image.

Preferably, in the above methods, for the area on the touch screen for displaying the predetermined image, presetting the invalid touch area specifically includes: for the area on the touch screen for displaying the predetermined image, presetting an area having a distance from an edge of the touch screen within a set width as the invalid touch area.

Specifically, when the area on the touch area for displaying the predetermined image extends to the edges of the touch screen, under the situation where the bezel of the mobile phone is relatively thin, the phenomenon that the user touches the edge areas of the touch screen by accident when holding the mobile phone at the bezel and thereby triggers an accidental operation function is easily to be occurred. In order to prevent the occurrence of such phenomenon, the embodiments of the present invention may, according to actual situations, determine the edge area of the touch screen which is usually touched by accident to trigger corresponding function by mistake when the touch screen displays the predetermined image, and set the edge area as the invalid touch area. In specific implementation, a width may be set, and an area which has a distance from an edge of the touch screen within the set width may be determined accurately as the invalid touch area. And, according to actual situations, it may also be designed that there is invalid touch area adjacent all of the four edges of the touch screen, or it may be designed that there is invalid touch area in proximity to two adjacent edges or two opposite edges of the touch screen.

In specific implementation, the user may enter a set width value through the interface, and then the backstage software may set an area having a distance from the edge of the touch screen within the set width value as the invalid touch area; or else, the user may determine an area having a distance from the edge of the touch area within the set width value as the invalid touch area by dragging a rectangular icon.

Preferably, in the above methods, for the area on the touch screen for displaying the predetermined image, presetting the invalid touch area specifically includes: for the area on the touch screen for displaying the predetermined image, presetting an area, which has a set length and a set width and is located at a set position, as the invalid touch area.

Specifically, when the touch screen displays the predetermined image, an area, which has a set length and a set width and is located at a set position, in the area on the touch screen for displaying the predetermined image may be determined as the invalid display area according to touch areas where accidental operations frequently occur. As compared with the solution in which the area having a distance from the edge of the touch screen within the set width as the invalid touch area, this method may locate the invalid touch area as required more accurately.

In specific implementation, the user may enter a set coordinate, a set length value and width value through the interface, and then the backstage software sets the corresponding area on the touch screen as the invalid touch area according to the entered values; or else, the user may determine a certain area on the touch screen as the invalid touch area by dragging a rectangular icon.

Preferably, when the invalid touch area is preset for the area on the touch screen for displaying the predetermined image, determining whether the touch point is located within the invalid touch area in the above step 21 specifically includes: when the touch screen displays the predetermined image, determining whether the touch point is located within the invalid touch area which is preset for the area on the touch screen for displaying the predetermined image.

Specifically, after setting the corresponding invalid touch area for the predetermined image, different predetermined images are likely to have different invalid touch areas. Thus, when detecting whether the touch point is located within the preset invalid touch area in the above step 21, the detection of whether the touch point is located within the corresponding invalid touch area shall be performed for different predetermined images displayed on the touch screen.

Preferably, determining whether the touch point is located within the set invalid touch area in the above step 21 specifically includes: when the touch screen displays the predetermined image, determining whether the touch point is located within the invalid touch area which is preset for the area on the touch screen for displaying the predetermined image, and the touch point is not responded to if it is determined that the touch point is located within the invalid touch area in the above step 22 specifically includes: when the touch screen displays the predetermined image, and it is determined that the touch point is located within the invalid touch area which is preset for the area on the touch screen for displaying the predetermined image, performing a control so as not to trigger the function corresponding to the invalid touch area.

Specifically, the predetermined image may be associated with the invalid touch area which is set for this predetermined image. When it is determined that the interface displayed on the touch screen is the predetermined image, the associated invalid touch area is immediately determined, and when it is determined that the touch point appears in the associated invalid touch area, a control is performed so as not to trigger the corresponding function, i.e., not responding to the touch operation.

### Second Embodiment

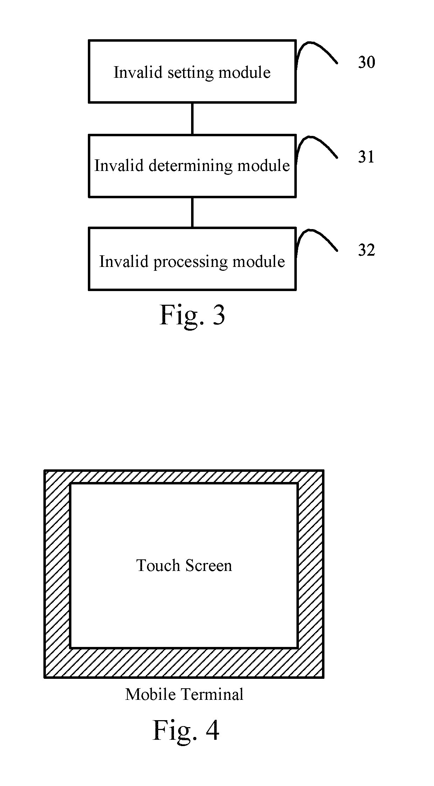

The present embodiment provides a touch screen which employs the method for preventing an accidental operation on the touch screen provided by the first embodiment. As shown in Fig. 3, the touch screen includes the following modules.

An invalid determining module 31 is configured to, when it is detected that a touch point exists in a display area on the touch screen, determine whether the touch point is located within a set invalid touch area.

An invalid processing module 32 is configured to, if it is determined that the touch point is located within the invalid touch area, not respond to the touch point.

Preferably, the touch screen further includes: an invalid setting module 30 configured to preset the invalid touch area within the display area on the touch screen.

Preferably, the invalid setting module 30 is specifically configured to, for an area on the touch screen for displaying a predetermined image, preset the invalid touch area.

Preferably, the invalid setting module 30 is further configured to, for the area on the touch screen for displaying the predetermined image, preset an area having a distance from an edge of the touch screen within a set width as the invalid touch area.

Preferably, the invalid setting module is further configured to, for the area on the touch screen for displaying the predetermined image, preset an area, which has a set length and a set width and is located at a set position, as the invalid touch area.

Preferably, the invalid determining module 31 is specifically configured to, when the touch screen displays the predetermined image, determine whether the touch point is located within the invalid touch area which is preset for the area on the touch screen for displaying the predetermined image.

Preferably, the invalid processing module 32 is specifically configured to, when the touch screen displays the predetermined image and when it is determined that the touch point is located within the invalid touch area which is preset for the area on the touch screen for displaying the predetermined image, perform a control so as not to trigger a function corresponding to the invalid touch area.

For specific functions realized by respective modules in the touch screen, the implementations of the method for preventing the accidental operation on the touch screen according to the first embodiment are referred to, and the detailed descriptions thereof are omitted.

### Third Embodiment

The present embodiment provides a mobile terminal. As shown in Fig. 4, the mobile terminal includes the touch screen mentioned in the above embodiments.

For the specific structures and functions of the touch screen in the mobile terminal, the structures and implementations of the touch screen according to the second embodiment are referred to, and the detailed descriptions are omitted.

Specifically, the mobile terminal may be any mobile electronic device having a touch screen, such as a mobile phone, a portable computer, a tablet PC, and an onboard PC.

Preferably, in the embodiments of the present invention, the mobile terminal is a mobile phone.

Specifically, with the touch screen employing the above method for preventing an accidental operation on the touch screen, the mobile phone may avoid the problem of accidental operations on the touch screen under various situations, especially the problem that the user touches the edge area of the touch screen by accident when holding the mobile phone at the bezel to trigger corresponding function which is likely to be occurred when the mobile phone is increasingly thinner as stated in the background.

### Fourth Embodiment

Detailed descriptions are made to the specific embodiments of the method for preventing an accidental operation on a touch screen, the touch screen and the mobile terminal provided by the present invention in the present embodiment. The present embodiment involves the procedure for setting an invalid touch area for an interface of call record of a mobile phone.

In step A, when the mobile phone displays the interface of call record on the touch screen, the invalid setting module is started, and then the touch screen displays a setting menu in which attribute values of the invalid touch area are set, specifically, setting a width value from the invalid touch area to the edge of the touch area as 20 pixels, and only setting two edges, i.e., a left edge and a right edge, among four edges of the touch screen (i.e., an upper edge, a bottom edge, the left edge and the right edge) as the invalid touch area.

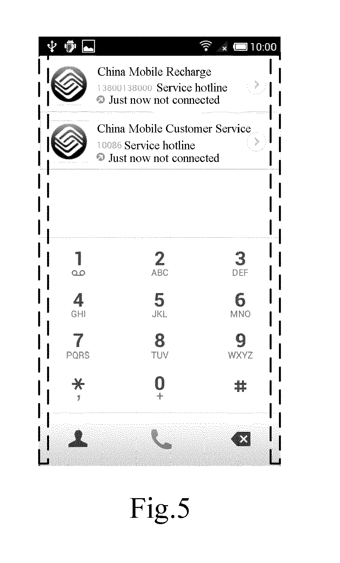

As shown in Fig. 5, the areas in dotted line are the invalid touch areas set for the interface of call record in this step, and these invalid touch areas are arranged at the left and right sides of the touch screen and the distance from the invalid touch areas to the edges of the touch screen is 20 pixels.

In the present embodiment, by default, when the invalid setting module is started under any image interface, the set invalid touch area is set for this image interface. Furthermore, the user may start the invalid setting module for the image interfaces corresponding to different functions in the setting function menu of the system, and thereby set the corresponding invalid touch areas.

In step B, the invalid determining module is started. When it is determined that the mobile phone is displaying the interface of call record, whether the touch point is located within the invalid touch area set in step A is determined. If yes, the procedure proceeds to step C.

In step C, the invalid processing module is started to control the touch point located within the invalid touch area not to respond to the touch operation, i.e., not to trigger the corresponding call function.

In the present embodiment, the invalid processing module associates the invalid touch area determined in step A with the interface of call record, and sets that when the touch screen displays the interface of call record, the touch point appearing in the invalid touch area do not respond to the touch operation, i.e., not to trigger the corresponding call function. Thus, when the invalid determining module starts the invalid processing module according to the detection result, the mobile phone of the user has the corresponding function of preventing a touch. For example, when the mobile phone has a thin bezel, even if the user is likely to touch the interface of call record at the edge of the touch screen when he/she holds the mobile phone at the bezel, the call function will not be triggered, and thereby the problem of accidental touches is avoided.

Correspondingly, in the present embodiment, invalid touch areas may be set for other image interfaces, for example, for the short message interface, and the contact interface.

In addition, in step A of the present embodiment, after the start of the invalid setting module, another setting menu may be displayed, specifically, setting a coordinate where the invalid touch area is located (which is by fault the coordinate of the bottom left corner of the invalid touch area), and setting values of the length and width of the invalid touch area.

Or else, in step A of the present embodiment, after the start of the invalid setting module, the specific invalid touch area may be determined by dragging a rectangular icon.

It is apparent that one of ordinary skill in this art may conceive various changes and modifications without departing from the spirit and scope of the present invention. Thus, if these changes and modifications of the present invention belong to the scope of the claims of the present invention and equivalent scope thereof, the present invention is intended to encompass such changes and modifications.

## Claims

1. A method for preventing an accidental operation on a touch screen, **characterized by** comprising:
when it is detected that a touch point exists in a display area on the touch screen, determining whether the touch point is located within a set invalid touch area; and
if it is determined that the touch point is located within the invalid touch area, not responding to the touch point.

2. The method according to claim 1, **characterized in that**, the invalid touch area is preset within the display area on the touch screen.

3. The method according to claim 2, **characterized in that**, the invalid touch area is preset within the display touch area on the touch screen specifically comprises:
for an area on the touch screen for displaying a predetermined image, presetting the invalid touch area.

4. The method according to claim 3, **characterized in that**, the presetting the invalid touch area for the area on the touch screen for displaying the predetermined image specifically comprises:
for the area on the touch screen for displaying the predetermined image, presetting an area having a distance from an edge of the touch screen within a set width as the invalid touch area.

5. The method according to claim 3, **characterized in that**, the presetting the invalid touch area for the area on the touch screen for displaying the predetermined image specifically comprises:
for the area on the touch screen for displaying the predetermined image, presetting an area, which has a set length and a set width and is located at a set position, as the invalid touch area.

6. The method according to any one of claims 3-5, **characterized in that**, the determining whether the touch point is located within the invalid touch area specifically comprises:
when the touch screen displays the predetermined image, determining whether the touch point is located within the invalid touch area which is preset for the area on the touch screen for displaying the predetermined image.

7. The method according to claim 6, **characterized in that**, the not responding to the touch point if it is determined that the touch point is located within the invalid touch area specifically comprises:
when the touch screen displays the predetermined image and when it is determined that the touch point is located within the invalid touch area which is preset for the area on the touch screen for displaying the predetermined image, performing a control so as not to trigger a function corresponding to the invalid touch area.

8. A touch screen, **characterized by** comprising:
an invalid determining module configured to, when it is detected that a touch point exists in a display area on the touch screen, determine whether the touch point is located within a set invalid touch area; and
an invalid processing module configured to, if it is determined that the touch point is located within the invalid touch area, not respond to the touch point.

9. The touch screen according to claim 8, **characterized by** further comprising:
an invalid setting module configured to preset the invalid touch area within the display area on the touch screen.

10. The touch screen according to claim 9, **characterized in that**, the invalid setting module is specifically configured to, for an area on the touch screen for displaying a predetermined image, preset the invalid touch area.

11. The touch screen according to claim 10, **characterized in that**, the invalid setting module is further configured to, for the area on the touch screen for displaying the predetermined image, preset an area having a distance from an edge of the touch screen within a set width as the invalid touch area.

12. The touch screen according to claim 10, **characterized in that**, the invalid setting module is further configured to, for the area on the touch screen for displaying the predetermined image, preset an area, which has a set length and a set width and is located at a set position, as the invalid touch area.

13. The touch screen according to any one of claims 10-12, **characterized in that**, the invalid determining module is specifically configured to, when the touch screen displays the predetermined image, determine whether the touch point is located within the invalid touch area which is preset for the area on the touch screen for displaying the predetermined image.

14. The touch screen according to claim 13, **characterized in that**, the invalid processing module is specifically configured to, when the touch screen displays the predetermined image and when it is determined that the touch point is located within the invalid touch area which is preset for the area on the touch screen for displaying the predetermined image, perform a control so as not to trigger a function corresponding to the invalid touch area.

15. A mobile terminal, **characterized by** comprising the touch screen according to any one of claims 8-14.
